# FASCICULE DE BREVET EUROPEEN

(11) **EP 0 785 606 B1**
(45) Date de publication et mention de la délivrance du brevet: **19.04.2000**
(21) Numéro de dépôt: 97400045.7
(22) Date de dépôt: 09.01.1997
(51) Int. Cl.: H02B 1/052

(54) **Dispositif de fixation d'un appareil électrique**
Vorrichtung zum Befestigen eines elektrischen Gerätes
Mounting device for an electrical apparatus

(30) Priorité: 18.01.1996 FR 9600836
(43) Date de publication de la demande: 23.07.1997
(73) Titulaire: Schneider Electric Industries SA, 92500 Rueil-Malmaison (FR)
(72) Inventeur: Barbier, René, 21560 Remilly Sur Tille (FR); Bouchard, Jean-Luc, 21000 Dijon (FR)
(74) Mandataire: Saint Martin, René

(56) Documents cités:
- DE-C- 1 191 180
- FR-A- 1 587 497
- FR-A- 2 551 807
- GB-A- 2 182 711
- GB-A- 2 277 201

## Description

La présente invention se rapporte à un dispositif de fixation d'un appareil électrique notamment d'interfaçage dont l'embase présente un dégagement central adapté à un rail de support et délimité d'un côté par une glissière ouverte dans laquelle peut se loger l'un des rebords du rail, l'autre rebord du rail pouvant être engagé dans des crochets de retenue (voir FR-A- 2 551 807).

D'une manière connue, l'embase d'un appareil d'interfaçage peut présenter à ses extrémités latérales des flasques latéraux et la fixation de l'appareil d'interfaçage sur un rail se fait alors à l'aide de patins élastiques solidaires desdits flasques. Les patins élastiques ont une fonction de montage et positionnement en même temps qu'une fonction de serrage de l'appareil sur le rail.

Il suffit cependant , notamment lors d'un démontage incorrect de l'appareil d'interfaçage, que la limite d'élasticité des patins soit dépassée pour que ces derniers n'assurent plus leur fonction de serrage. En outre, les flasques constituent, pour intégrer les fonctions de positionnement et de serrage, des pièces moulées de forme nécessairement élaborée.

Par ailleurs, la présence de ces patins pour la fixation de l'appareil augmente l'encombrement de celui-ci, principalement au niveau de sa profondeur.

L'invention a pour but de réaliser un dispositif de fixation d'un appareil électrique à faible coût et de manière simple en garantissant une fixation rigide de l'appreil sur le rail. Elle permet aussi de réduire l'encombrement du dispositif de fixation afin de diminuer l'encombrement total de l'appareil.

Selon l'invention, le dispositif est caractérisé en ce que l'embase est formée par une pièce extrudée, qu'il comprend au moins un ressort de flexion inséré par coulissement doux dans la glissière de manière que la longueur du ressort soit sensiblement dirigée selon la longueur de la glissière, le ressort de flexion étant un ressort à lame ménageant une face de contact apte à venir en contact avec le chant d'un rebord du rail, et des moyens d'arrêt du ressort dans la glissière.

Des flasques latéraux sont montés aux extrémités latérales de l'embase et présentent des butées destinées à s'appliquer sur le chant du rebord du rail logé dans la glissière afin de limiter la flexion du ressort.

Le ressort à lame présente une ondulation comprenant au moins deux convexités inférieure et supérieure qui s'appuient sur le fond de la glissière et sur des retours internes de la glissière parallèles au fond, la convexité inférieure constituant la face de contact du ressort avec le rail.

Le ressort présente avantageusement à son extrémité avant une convexité coopérant avec le fond de la glissière de manière à faciliter l'insertion du ressort dans la glissière et à son extrémité arrière une arête de maintien destinée à freiner le ressort dans la glissière.

L'emprisonnement du ressort dans la glissière est garanti par la fixation des flasques latéraux de fermeture aux extrémités de l'embase. Les flasques latéraux peuvent par ailleurs comprendre les crochets de retenue servant à maintenir le rebord du rail opposé à celui logé dans la glissière de l'embase.

La description faite ci-après en regard des dessins fera ressortir les caractéristiques et avantages de l'invention. Aux dessins annexés:
- la figure 1 représente une vue éclatée en perspective d'un appareil d'interfaçage monté sur un rail de support;
- la figure 2 représente une vue de côté, en partie en coupe selon ll-ll, de l'embase de l'appareil équipée du dispositif de fixation selon l'invention;
- la figure 3 est une vue arrière en coupe selon III-III d'une partie de l'embase;
- la figure 4 est une vue de côté, en partie en coupe selon II-II, de l'appareil au début de l'opération de montage sur le rail de support;
- la figure 5 représente une vue de côté de l'appareil, en partie en coupe selon II-II, après montage sur le rail de support;
- la figure 6 représente une vue de côté de l'appareil après montage sur le rail de support.

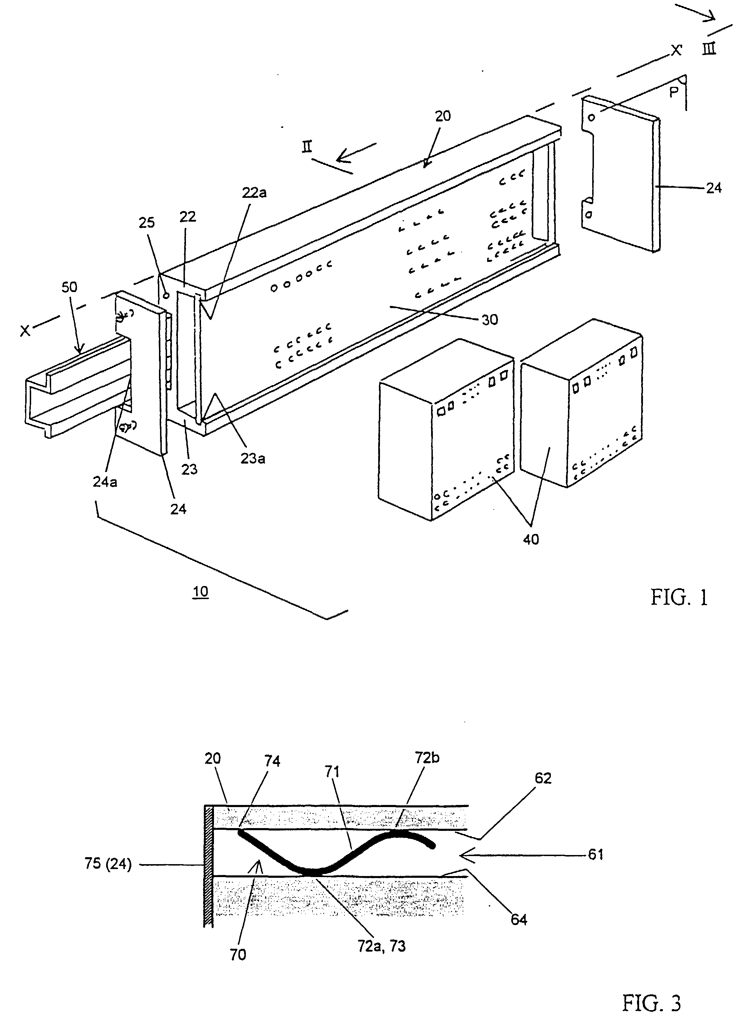

L' appareil d'interfaçage 10, illustré à la figure 1, est destiné à être interposé électriquement entre une unité de traitement, par exemple un automate programmable, et un équipement électrique susceptible d'être exploité ou commandé par cette unité.

Le dispositif 10 comprend une embase 20 allongée s'étendant selon une direction X-X', une carte à circuit imprimé 30 de plan général P logée dans l'embase selon la longueur de celle-ci et des blocs modulaires électriques d'interface 40 fixés par soudure à la carte 30.

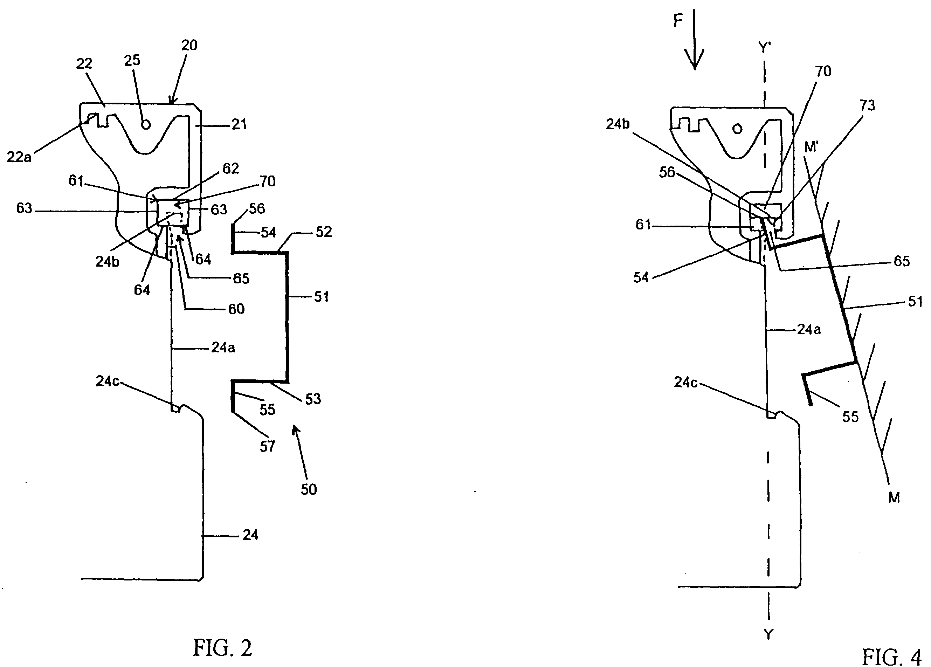

L'embase 20 (figure 2) est une pièce profilée en U en matière plastique, obtenue par extrusion et découpée à la longueur voulue correspondant au nombre de blocs modulaires souhaités.

L'embase 20 présente une âme 21 parallèle au plan P, une aile supérieure 22 et une aile inférieure 23. Les ailes 22, 23 font saillie vers l'avant à partir de l'âme et comprennent des rainures en regard 22a, 23a orientées selon la direction X-X' pour recevoir par glissement la carte 30.

Des flasques latéraux de fermeture 24 sont montés aux extrémités latérales de l'embase; leur fixation à l'embase est réalisée au moyen de vis coopérant avec des orifices 25 situés près des raccordements des ailes 22, 23 à l'âme 21, mais pourrait aussi être réalisée par clipsage.

L'appareil d'interfaçage 10 est destiné à être monté sur un rail de support 50 d'une paroi ou d'une platine.

Le rail de support 50 est plié de manière à présenter, en section droite, une forme en "chapeau" normalisée. Le rail est constitué par une âme centrale 51 raccordée à deux ailes 52, 53 repliées en formant deux rebords 54, 55 situés dans le même plan, de part et d'autre de l'âme centrale 51. Le rebord supérieur 54 forme un chant supérieur 56 et le rebord inférieur 55 forme un chant inférieur 57.

Le dispositif de fixation de l'appareil sur le rail comporte des moyens élastiques de positionnement et de serrage disposés sur l'embase et des moyens de maintien disposés sur les flasques latéraux.

L'âme 21 de l'embase 20 présente, à l'arrière et sur toute la longueur de l'embase, un dégagement central 60 adapté au rail de support 50. Le dégagement 60 est délimité à son extrémité supérieure selon l'axe X-X', par une glissière 61 ouverte vers le bas et adaptée à recevoir le rebord supérieur 54 du rail.

La glissière ouverte 61 comprend un fond 62, des rebords 63 munis de retours internes 64 parallèles au fond 62 et une ouverture 65 située entre les retours 64 et en regard du fond 62. La glissière autorise le logement selon l'axe X-X' d'au moins un ressort de flexion 70, de type ressort à lame, constituant les moyens élastiques de positionnement et de serrage. Suivant la longueur de l'embase, il est possible de prévoir deux ressorts à lame situés respectivement aux deux extrémités de la glissière.

Le ressort à lame 70 est introduit par coulissement doux dans la glissière 61 de manière que la longueur du ressort soit sensiblement dirigée selon la longueur de la glissière.

Lorsque le ressort est engagé dans la glissière (figure 3), le ressort est contraint et est apte à fléchir orthogonalement à X-X'. Il présente une ondulation 71 de manière que les convexités inférieure et supérieure 72a, 72b de l'ondulation s'appuient suivant la largeur du ressort sur le fond 62 et les retours internes 64 de la glissière. La convexité supérieure 72b constitue l'extrémité avant du ressort de façon à faciliter l'insertion de celui-ci dans la glissière. La convexité inférieure 72a constitue une surface de contact 73 destinée à venir au contact du rail 50. Une arête de maintien 74 constitue l'extrémité arrière du ressort et est en contact avec le fond 62 de la glissière pour assurer le freinage du ressort. Le ressort est emprisonné dans la glissière 61 par des moyens d'arrêt 75. Les moyens d'arrêt 75 sont constitués par les flasques de fermeture 24 obturant les extrémités de la glissière. Il est aussi possible d'ajouter comme moyens d'arrêt une forme transversale dans la glissière, telle qu'une concavité apte à coopérer avec l'arête 74.

Les flasques latéraux de fermeture 24 comprennent un dégagement 24a parallèle au plan P, autorisant le logement du rail 50 et positionné en saillie par rapport au dégagement 60 de l'embase. Le dégagement 24a est délimité dans sa partie supérieure par une butée 24b destinée à s'appliquer sur le chant supérieur 56 du rail et dans sa partie inférieure par des crochets de retenue 24c constituant les moyens de maintien du rebord inférieur 55 du rail.

Le fonctionnement du dispositif va maintenant être décrit en se référant aux figures 4, 5 et 6.

Pour monter l'appareil d'interfaçage 10 sur le rail de support 50, on engage celui-ci via l'ouverture 65 de la glissière sur le rebord supérieur 54 du rail (figure 4) de manière que la face de contact 73 du ressort à lame 70 vienne en appui avec le chant 56 du rebord supérieur 54. On note que le rebord supérieur 54 commence à être engagé dans la glissière 61 mais que le rebord inférieur 55 n'est pas engagé dans les crochets de retenue 24c. Le plan Y-Y' du fond du dégagement 24a fait un angle aigu avec le plan M-M' de l'âme 51 du rail de support.

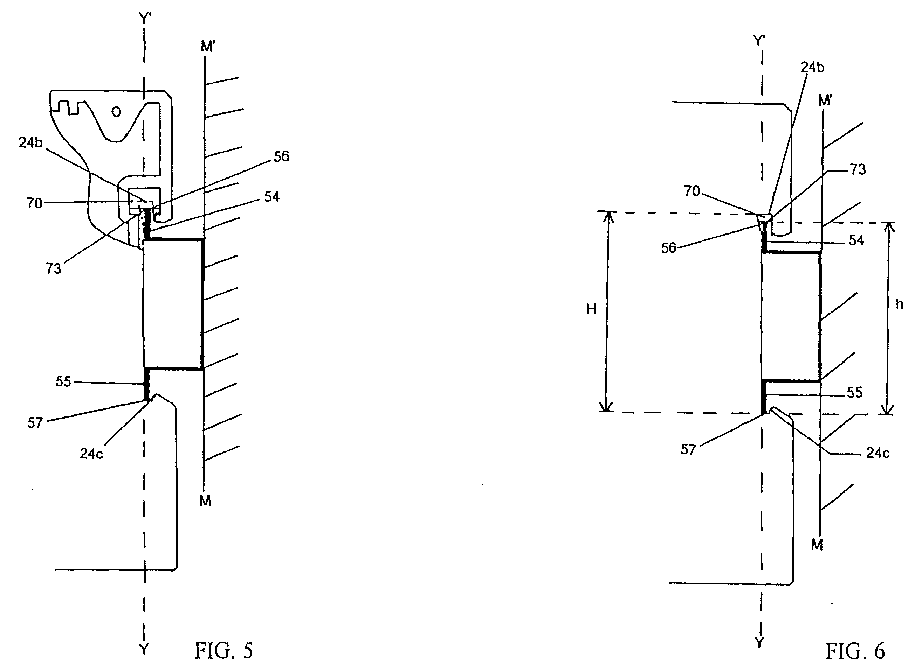

Pour clipser l'appareil d'interfaçage sur le rail, on exerce sur l'appareil une force sensiblement verticale F dirigée de haut en bas ce qui a pour effet de faire fléchir le ressort à lame 70 et d'enfoncer un peu plus le rebord supérieur 54 dans la glissière 61. On peut alors faire basculer légèrement l'appareil d'interfaçage de façon que les butées 24b des flasques vienne en appui contre le chant supérieur 56 du rail et que le rebord inférieur 55 du rail soit positionné en face des crochets 24c. En relâchant l'effort exercé sur l'appareil d'interfaçage, les crochets 24c des flasques viennent s'engager dans le rebord 55 du rail, le fond des crochets s'appliquant sur le chant 57 du rail (figures 5 et 6).

Les dégagements 60 de l'embase et 24a des flasques ont des dimensions adaptées au clipsage par flexion du ressort à lame 70. La hauteur H entre les butées 24b et le fond des crochets 24c est légèrement plus grande que la hauteur h entre les chants 56 et 57 (figure 6).

En outre, les flasques latéraux 24 ont d'une part, une fonction d'arrêt et d'emprisonnement du ressort par l'obturation de la glissière 61, et d'autre part, une fonction de limitation de flexion du ressort par la butée 24b venant en appui sur le chant supérieur 56 du rail. Ainsi, le ressort ne peut pas être endommagé et écrasé de manière à dépasser sa limite élastique, la fonction de serrage reste toujours assurée.

Pour enlever l'appareil d'interfaçage 10 du rail de support 50, il suffit d'exercer une force sensiblement verticale dirigée de haut en bas sur l'appareil et de le faire basculer de manière à revenir à la position de la figure 4.

Il va de soi que le dégagement 60 de l'embase pourrait comprendre la glissière 61 dans sa partie inférieure et non dans sa partie supérieure et les crochets de retenue 24c seraient alors disposés dans la partie supérieure des flasques.

Dans un autre mode de réalisation du dispositif de fixation, les crochets de retenue 24c pourraient être solidaires de l'embase en regard de la glissière 61.

Le dispositif de fixation décrit ci-dessus concerne la fixation d'un appareil électrique sur un rail de support de forme en chapeau, il va de soi que la fixation pourrait s'effectuer sur tout type de rail en réalisant alors un dispositif de fixation muni par exemple de deux glissières en regard portant des ressorts de flexion.

## Revendications

1. Dispositif de fixation d'un appareil électrique (10) dont l'embase (20) présente un dégagement central (60) adapté à un rail de support (50) et délimité d'un côté par une glissière ouverte (61) dans laquelle peut se loger l'un des rebords (54) du rail, l'autre rebord (55) du rail pouvant être engagé dans des crochets de retenue (24c), caractérisé par le fait que:
- l'embase (20) est formée par une pièce extrudée,
- le dispositif comprend au moins un ressort de flexion (70) inséré par coulissement doux dans la glissière (61) de manière que la longueur du ressort soit sensiblement dirigée selon la longueur de la glissière, le ressort de flexion (70) étant un ressort à lame ménageant une face de contact (73) apte à venir en contact avec le chant (56) d'un rebord (54) du rail,
- et le dispositif comprend des moyens d'arrêt (75) du ressort dans la glissière (61).

2. Dispositif selon la revendication 1, caractérisé en ce que des flasques latéraux (24) sont montés aux extrémités latérales de l'embase (20) et présentent des butées (24b) destinées à s'appliquer sur le chant (56) du rebord (54) du rail logé dans la glissière (61) afin de limiter la flexion du ressort (70).

3. Dispositif selon la revendication 1 ou 2, caractérisé en ce que le ressort à lame (70) présente une ondulation (71) comprenant au moins deux convexités inférieure (72a) et supérieure (72b) qui s'appuient sur le fond (62) de la glissière et sur des retours internes (64) de la glissière parallèles au fond (62), la face de contact (73) étant formée par la convexité inférieure (72a) de l'ondulation (71).

4. Dispositif selon l'une quelconque des revendications précédentes, caractérisé en ce que le ressort à lame (70) présente à son extrémité avant une convexité (72a) coopérant avec le fond (62) de la glissière de manière à faciliter l'insertion du ressort dans la glissière et à son extrémité arrière une arête de maintien (74) destinée à freiner le ressort dans la glissière.

5. Dispositif selon l'une quelconque des revendications précédentes, caractérisé en ce que les moyens d'arrêt (75) sont constitués par des flasques latéraux (24) montés aux extrémités latérales de l'embase (20) de manière à obturer les extrémités de la glissière (61).

6. Dispositif selon l'une quelconque des revendications 1 à 4, caractérisé en ce que les moyens d'arrêt (75) sont constitués par une forme transversale réalisée dans la glissière (61).

7. Dispositif de fixation selon l'une quelconque des revendications précédentes, caractérisé en ce que les crochets de retenue (24c) sont solidaires de flasques latéraux (24) montés aux extrémités latérales de l'embase (20).

## Patentansprüche

1. Befestigungsvorrichtung eines elektrischen Gerätes (10), dessen Sockel (20) eine mittlere Aussparung (60) aufweist, die einer Tragschiene (50) angepasst ist und auf einer Seite von einer offenen Gleitschiene (61) begrenzt wird, die einen der Ränder (54) der Schiene aufnehmen kann, während der andere Rand (55) der Schiene in Rückhaltehaken (24c) eingeführt werden kann, dadurch gekennzeichnet, dass :
- der Sockel (20) von einem extrudierten Teil gebildet wird,
- die Vorrichtung mindestens eine Flexionsfeder (70) umfasst, die in die Gleitschiene (61) eingeschoben wird, so dass die Länge der Feder etwa nach der Länge der Gleitschiene ausgerichtet ist, wobei die Flexionsfeder (70) eine Blattfeder mit einer Kontaktfläche (73) ist, die sich mit der Kante (56) eines Randes (54) der Schiene in Kontakt versetzen kann,
- und dass die Vorrichtung Arretiermittel (75) der Feder in der Gleitschiene (61) umfasst.

2. Vorrichtung nach Anspruch 1, dadurch gekennzeichnet, dass an den seitlichen Enden des Sockels (20) seitliche Flansche (24) montiert sind, die Anschläge (24b) aufweisen, die sich gegen die Kante (56) des Randes (54) der in der Gleitschiene (61) angeordneten Schiene abstützen sollen, um die Flexion der Feder (70) zu begrenzen.

3. Vorrichtung nach Anspruch 1 oder 2, dadurch gekennzeichnet, dass die Blattfeder (70) eine Wellung (71) aufweist, die mindestens eine untere (72a) und eine obere (72b) Konvexität umfasst, die sich gegen den Boden (62) der Gleitschiene und gegen interne, parallel zum Boden (62) verlaufende Rücksprünge (64) der Gleitschiene abstützen, wobei die Kontaktfläche (73) von der unteren Konvexität (72a) der Wellung (71) gebildet wird.

4. Vorrichtung nach einem der vorstehend genannten Ansprüche, dadurch gekennzeichnet, dass die Blattfeder (70) an ihrem vorderen Ende eine Konvexität (72a) aufweist, die mit dem Boden (62) der Gleitschiene zusammenwirkt, um das Einfügen der Feder in die Gleitschiene zu erleichtern, und an ihrem hinteren Ende eine Haltekante (74), die die Feder in der Gleitschiene abbremsen soll.

5. Vorrichtung nach einem der vorstehend genannten Ansprüche, dadurch gekennzeichnet, dass die Arretiermittel (75) aus seitlichen Flanschen (24) bestehen, die an den seitlichen Enden des Sockels (20) montiert sind, so dass sie die Enden der Gleitschiene (61) verschliessen.

6. Vorrichtung nach einem der Ansprüche 1 bis 4, dadurch gekennzeichnet, dass die Arretiermittel (75) aus einer in der Gleitschiene (61) vorgesehenen Querform bestehen.

7. Befestigungsvorrichtung nach einem der vorstehend genannten Ansprüche, dadurch gekennzeichnet, dass die Rückhaltehaken (24c) an den seitlichen Flanschen (24) befestigt sind, die sich an den seitlichen Enden des Sockels (20) befinden.

## Claims

1. Fastening device for an electrical apparatus (10) whose base (20) has a central clearance (60) that matches a support rail (50) and is delimited on one side by an open slide rail (61) in which one edge (54) of the support rail can be housed, the other edge (55)of the support rail being held by retaining hooks (24c), characterized in that:
- the base (20) consists of an extruded part,
- the device comprises at least one deflection spring (70) that is inserted by smoothly sliding into the slide rail (61) so that the length of the spring runs more or less along the length of the slide rail, the deflection spring (70) being a leaf spring with one contact surface (73) capable of pressing against the cant (56) of one edge (54) of the support rail,
- and the device includes means of stopping (75) the spring in the slide rail (61).

2. Fastening device according to claim 1, characterized in that lateral flanges (24) are mounted on the lateral ends of the base (20) that have stops (24b) designed to bear on the cant (56) of the edge (54) of the support rail housed in the slide rail (61) in order to limit deflection of spring (70).

3. Fastening device according to claim 1, characterized in that leaf spring (70) has an undulation (71) comprising at least two lower (72a) and upper (72b) convexities that bear on the bottom (62) of the slide rail and inner rebates (64) of the slide rail parallel to the bottom (62), the contact surface (73) being formed by the lower convexity (72a) of the undulation (71).

4. Fastening device according to claim 1, characterized in that leaf spring (70) has at its forward end a convexity (72a) that matches the bottom (62) of the slide rail to facilitate insertion of the spring into the slide rail, and has at its rear end a retaining stop (74) designed to brake the spring inside the slide rail.

5. Fastening device according to claim 1, characterized in that stopping means (75) consist of lateral flanges (24) mounted on the lateral ends of the base (20) so as to close the ends of slide rail (61)

6. Fastening device according to claim 1, characterized in that stopping means (75) consist of a transverse shape built into the slide rail (61).

7. Fastening device according to claim 1, characterized in that retaining hooks (24c) are built into lateral flanges (24) mounted on the lateral extremities of the base (20).
